# EUROPEAN PATENT APPLICATION

(11) **EP 2 383 685 A1**
(43) Date of publication of application: **02.11.2011**
(21) Application number: 09840668.9
(22) Date of filing: 18.12.2009
(51) Int. Cl.: G06Q 10/00

(54) **EXPERT SYSTEM FOR PREPROCESSING WORK ORDERS AND METHOD FOR PREPROCESSING WORK ORDERS**

(30) Priority: 27.02.2009 CN 200910004698
(71) Applicant: ZTE Corporation, Shenzhen, Guangdong 518057 (CN)
(72) Inventor: WANG, Donghui, Shenzhen Guangdong 518057 (CN); YE, Wei, Shenzhen Guangdong 518057 (CN)
(74) Representative: Goodwin, Mark
(86) International application number: PCT/CN2009/075703
(87) International publication number: WO 2010/097000

(57) **Abstract**

The present invention discloses an expert system for order preprocessing, which comprises a knowledge base for storing and expressing knowledge for order preprocessing, wherein the knowledge comprises a conclusion for providing a decision basis for order processing and premises for deriving the conclusion; and an inference engine for inquiring corresponding premises in the knowledge base according to a request input by a user and deriving a conclusion according to the inquired premises in combination with fact data input by the user specific to the premises. The present invention further discloses an order preprocessing method. The present invention can solve the problems of long preprocessing time, low accuracy rate of preprocessing results and poor service quality caused by manual order preprocessing.

## Description

### TECHNICAL FIELD

The present invention relates to the field of order preprocessing technology, particularly to an expert system for order preprocessing and an order preprocessing method.

### BACKGROUND

In current communication systems, there is generally provided a call center, which is a user-opened electronic channel of a corporation for providing users with professional technical supports. The call center can handle service requests of users, such as complaint and suggestion, fault reporting and so on, which are completed by communications between a user and a Customer Service Representative (CSR).

A CSR handles a service request in the following steps:
1. The CSR attempts to preprocess a service request of a user according to the knowledge mastered by himself/herself from training, and tries his/her best to help the user solve the problem or explain the problem with the his/her knowledge.
2. If the preprocessing is failed and the user insists on making a complaint or a fault reporting, the CSR fills an electronic order using the related software in the call center and sends the electronic order to other related departments for further processing.

At present, the aforementioned step 1, which is generally known as order preprocessing, is completed by a CSR of the call center using the knowledge mastered by himself/herself from training, thereby the following problems may be brought about:
1. training is extremely difficult: for a large-scale enterprise (e.g. a telecom operator) which provides a great variety of products and services that are frequently updated, it is a complicated and high-difficult process of training CSRs to master the knowledge of each product and service;
2. the workload and cost of training is extremely high: for a large-scale call center (e.g. the call center of a telecom operator) which generally has 500-2000 CSRs, the workload will be high if a complete training is conducted for each CSR; furthermore, the workload and cost of training CSRs will be increased due to the high staff turnover of such large-scale call center;
3. preprocessing results are different depending on different CSRs: as CSRs are differ from each other in new knowledge absorption and understanding ability, the training effect varies from person to person, which results in different service quality of preprocessing the service request of a user, a poor preprocessing cannot reach a desired purpose or even mislead the user, which influences the service quality as well as the user experience;
4. preprocessing lasts a long time: due to the deficiency of CSRs in professional skill, during the preprocessing, due to poor logic, a CSR may bother the user with many unnecessary problems before the final conclusion is reached, which will increase the average communication time, and as one of the important indexes for evaluating the operational level of a call center, the increase of the average communication time will degrade the operational level of the operator.

No effective solution has been proposed yet to solve the problems existing in related technologies that manual order preprocessing results in long preprocessing time, low accuracy rate of preprocessing results and poor service quality and consequentially the user experience and the operational level of the operator are affected.

### SUMMARY

Considering the problems existing in related technologies that manual order preprocessing results in long preprocessing time, low accuracy rate of preprocessing results and poor service quality and consequentially the user experience and the operational level of the operator are affected, the present invention is proposed with a main object of providing an expert system for order preprocessing and an order preprocessing method to solve the problems above.

In order to realize the purpose above, an expert system for order preprocessing is provided in accordance with an aspect of the present invention.

According to the present invention, an expert system for order preprocessing comprises:
a knowledge base for storing and expressing knowledge for order preprocessing, wherein the knowledge comprises a conclusion for providing a decision basis for order processing and premises for deriving the conclusion; and
an inference engine for inquiring corresponding premises in the knowledge base according to a request input by a user and deriving a conclusion according to the inquired premises in combination with fact data input by the user specific to the premises.

Preferably, the system may further comprise:
a data acquisition module for acquiring, according to the premises inquired by the inference engine, the fact data input by the user specific to the premises, and sending the acquired fact data to the interference engine.

Preferably, the inference engine may comprise:
a knowledge reading module for sending an inquiry request to the knowledge base according to knowledge category carried in the request and receiving a knowledge list corresponding to the knowledge category from the knowledge base, wherein the knowledge list contains at least one piece of knowledge, and each piece of knowledge comprises at least one premise, reference data for indexing at least one premise and a conclusion corresponding to a piece of knowledge;
a data reading module for sequentially sending premises of knowledge in the knowledge list that is currently subjected to a match analysis to the data acquisition module and indicating the data acquisition module to acquire fact data; and
a matching module for performing a match analysis on the knowledge according to the reference data and the fact data and obtaining the conclusion if the fact data is totally matched with the reference data.

Preferably, the matching module may be further used for:
indicating, if the fact data is unmatched with the reference data, the data reading module to acquire fact data for a next piece of knowledge in the knowledge list and performing a match analysis on the next piece of knowledge.

Preferably, the system may further comprise:
a runtime library for storing the fact data acquired by the data acquisition module and/or the conclusion obtained by the matching module from matching analysis.

Preferably, the system may further comprise:
a user interface module for receiving the request and the fact data input by the user and displaying the user the premises of the knowledge in the knowledge list from the data acquisition module and the conclusion obtained by the matching module from matching analysis.

Preferably, the system may further comprise:
an knowledge acquisition module for acquiring knowledge required for the order preprocessing and updating the knowledge base.

An order preprocessing method is provided in accordance with another aspect of the present invention.

According to the present invention, an order preprocessing method comprises:
inquiring corresponding premises in a knowledge base according to a request input by a user, wherein the knowledge base contains knowledge for order preprocessing, and the knowledge comprises a conclusion for providing a decision basis for order processing and premises for deriving the conclusion; and
deriving a conclusion according to the inquired premises and fact data input by the user specific to the premises.

Preferably, the processing of inquiring corresponding premises in a knowledge base according to a request input by a user may comprise:
sending an inquiry request to the knowledge base according to knowledge category carried in the request and receiving a knowledge list corresponding to the knowledge category from the knowledge base; wherein the knowledge list contains at least one piece of knowledge, and each piece of knowledge comprises at least one premise, reference data for indexing at least one premise and a conclusion corresponding to a piece of knowledge.

Preferably, the processing of deriving the conclusion may comprise:
for knowledge in the knowledge list that is currently subjected to a match analysis, searching for matched reference data according to fact data input by the user specific to premises of the knowledge, deriving the conclusion if the reference data can be found which is matched with all the fact data input by the user specific to the knowledge; or stopping the match analysis on the knowledge if no reference data is found which is matched with the fact data input by the user specific to the premises of the knowledge, and then taking a next piece of knowledge in the knowledge list as knowledge to be subjected to a match analysis.

Preferably, the method may further comprise:
If the premises of the knowledge in the knowledge list that is currently subjected to a match analysis are indexed to another piece of knowledge, performing a match analysis on the another piece of knowledge, and taking a conclusion resulting from the match analysis as fact data of the premises.

Preferably, the processing of deriving the conclusion according to the inquired premises and the fact data input by the user specific to the premises may further comprise:
after the user inputs the fact data specific to the premises, storing the fact data so that a match analysis can be performed later on the fact data and the reference data corresponding to the same premises.

Preferably, the knowledge list may further comprise a match analysis priority corresponding to a piece of knowledge in the at least one piece of knowledge.

In the technical solution of the present invention, the expert system performs a match analysis according to the premises contained in the knowledge in the knowledge base and the fact data input by a user specific to the premises, obtains the conclusion in the knowledge, and takes the conclusion as the decision basis for order processing, therefore, the present invention can solve the problems existing in related technologies that manual order preprocessing results in long preprocessing time, low accuracy rate of preprocessing results and poor service quality and consequentially the user experience and the operational level of the operator are affected. Therefore, the expert system is capable of performing order preprocessing in a fast, accurately and effectively way, thus improving the user experience and the operational level of the operator.

### BRIEF DESCRIPTION OF THE DRAWINGS

Fig. 1 is a structure diagram of an expert system for order preprocessing according to a system embodiment of the present invention;
Fig. 2 is a preferred structure diagram of an expert system for order preprocessing according to a system embodiment of the present invention;
Fig. 3 is a workflow chart of the system shown in Fig. 2;
Fig. 4 is a flow chart of an order preprocessing method according to a method embodiment of the present invention.

### DETAILED DESCRIPTION

In order to solve the problems existing in related technologies that manual order preprocessing results in long preprocessing time, low accuracy rate of preprocessing results and poor service quality and consequentially the user experience and the operational level of the operator are affected, an expert system for order preprocessing is provided first in the embodiments of the present invention. The system performs a match analysis according to premises contained in the knowledge in a knowledge base and the fact data input by a user specific to the premises to obtain a conclusion in the knowledge, and takes the conclusion as a decision basis for order processing, and therefore improves the accuracy of the preprocessing. Additionally, by adopting a method of questioning a user in an oriented manner according to the premises in the knowledge, the present invention avoids the problem of long preprocessing time existing in related technologies, thus improving the user experience and the operational level of the operator and reducing the cost of the operator on training CSRs.

It should be noted that the embodiments of the present invention and the features thereof may be combined with each other on condition that no conflict is caused, and that such combinations belong to the protection scope of the present invention.

The embodiments of the invention are illustrated hereinafter in combination with the drawings, and it should be appreciated that the preferred embodiments herein are intended to illustrate and explain the invention only but not to limit the present invention.

An embodiment of the present invention provides an expert system for order preprocessing.

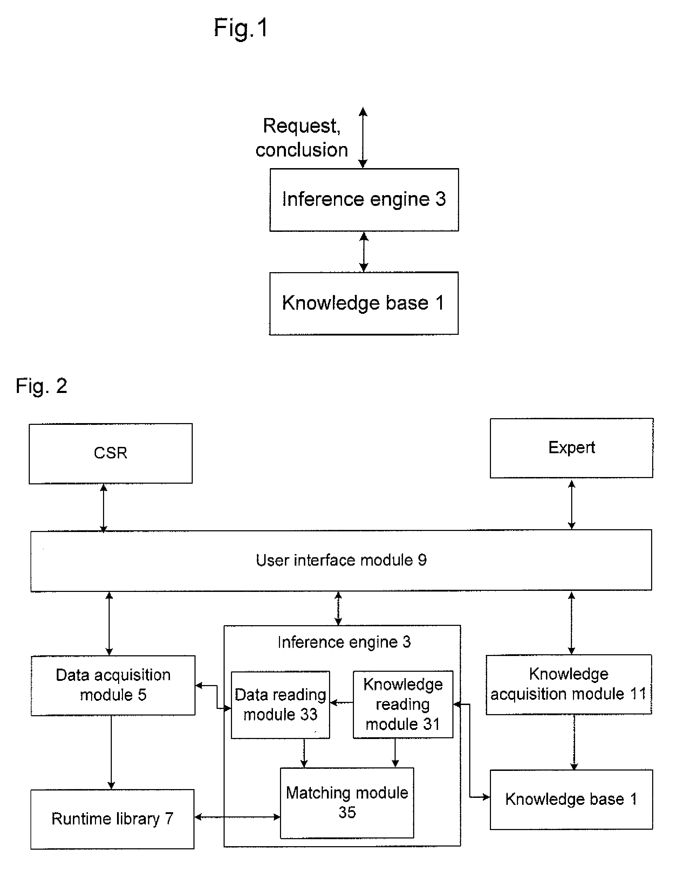

Fig. 1 shows a structure of an expert system for order preprocessing according to a system embodiment of the present invention, and Fig. 2 shows a preferred structure of an expert system for order preprocessing according to the system embodiment of the present invention.

As shown in Fig. 1, the expert system for order preprocessing comprises a knowledge base 1 and an inference engine 3. On the basis of Fig. 1, Fig. 2 further shows a data acquisition module 5, a runtime library 7, a user interface module 9 and a knowledge acquisition module 11; and the inference engine 3 further comprises a knowledge reading module 31, a data reading module 33 and a matching module 35. The function of each aforementioned module is described below in details.

### 1. Knowledge base 1

The knowledge base 1 is used for storing and expressing the knowledge for preprocessing; wherein the knowledge comprises conclusions for providing a decision basis for order processing and premises for deriving conclusions. Specifically, the knowledge stored in the knowledge base 1 is input by experts through the user interface module 9 and comprises the knowledge of various business categories and service categories, that is, the knowledge is of various categories, and each category of knowledge comprises multiple pieces of knowledge. Preferably, in the knowledge base 1, each piece of knowledge may be described by a knowledge representation method of production rule, that is, each piece of knowledge comprises at least one premise, reference data for indexing at least one premise and a conclusion corresponding to each piece of knowledge,.

Preferably, the knowledge base 1 is further used for sending a knowledge list that is acquired according to the knowledge category carried in a query request from the knowledge reading module 31 to the knowledge reading module 31.

### 2. Inference engine 3

The inference engine 3 connects with the knowledge base 1, and preferably connects with the data acquisition module 5, the runtime library 7 and the user interface module 9. The inference engine 3 inquires corresponding premises in the knowledge base 1 according to a request input by a user through the user interface module 9 and derives a conclusion according to the inquired premises in combination with the fact data input by the user specific to the premises. Preferably, a knowledge category is carried in the request.

Preferably, as shown in Fig. 2, the inference engine 3 comprises a knowledge reading module 31, a data reading module 33 and a matching module 35.

The knowledge reading module 31 connects with the knowledge base 1. The knowledge reading module 31 sends an inquiry request to the knowledge base 1 according to the knowledge category carried in the request input by the user, and receives a knowledge list corresponding to the knowledge category from the knowledge base 1, wherein the knowledge list contains at least one piece of knowledge.

The data reading module 33 connects with the data acquisition module 5 and indicates the fact data that the data acquisition module 5 needs to acquire according to the premises of the knowledge in the knowledge list.

The matching module 35 connects with the knowledge reading module 31, the data reading module 33 and the runtime library 7. The matching module 35 performs a match analysis on the knowledge in the knowledge list according to the premises and reference data of the knowledge in the knowledge list acquired by the knowledge reading module 31 and the received fact data. Specifically, for the knowledge in the knowledge list that is currently subjected to a match analysis, the matching module 35 searches for matched reference data according to the fact data input by the user through the data reading module 33 specific to the premises of the knowledge. The matching module 35 derives the conclusion if the reference data is found which is matched with all the fact data input by the user specific to the knowledge. The matching module 35 stops the match analysis on the knowledge if no reference data is found which is matched with the fact data input by the user specific to the premises of the knowledge, and then takes a next piece of knowledge in the knowledge list as the knowledge to be subjected to a match analysis.

Specifically, the matching module 35 may further sequentially performs a match analysis on each piece of knowledge in the knowledge list according to the match analysis priority of the knowledge. For each piece of knowledge to be subjected to a match analysis, the user interface module 9 displays the premises of the piece of the knowledge one by one and receives the fact data input by the user specific to the premises. The matching module 35 determines whether the fact data input by the user specific to each displayed premise is matched with the reference data of the corresponding premise. The matching module 35 determines the match analysis on the piece of knowledge is failed if one piece of fact data is unmatched with the reference data of the current premise, and then performs a match analysis on a next piece of knowledge in the knowledge list. Preferably, the fact data specific to an appeared premise stored in the runtime library 7 may be acquired during the match analysis of the next piece of knowledge. The matching module 35 determines the match analysis on the piece of knowledge is succeeded if the reference data of all the premises of the piece of knowledge is matched with the corresponding fact data input by the user, and then obtains the conclusion contained in the piece of knowledge.

By setting the knowledge base and the inference engine, this embodiment performs a match analysis according to the premises contained in a piece of knowledge and the fact data input by the user specific to the premises and takes the conclusion as a decision basis for order processing, thus improving the accuracy of preprocessing.

### 3. Data acquisition module 5

The data acquisition module 5 connects with the data reading module 33, the runtime library 7 and the user interface module 9. The data acquisition module 5 receives, through the user interface module 9, the fact data input by the user specific to at least one premise according to an indication from the data reading module 33. Preferably, the data acquisition module 5 may store the fact data in the runtime library 7.

### 4. Runtime library 7

The runtime library 7 connects with the data acquisition module 5 and the matching module 35. The runtime library 7 stores the fact data acquired by the data acquisition module 5 and the conclusion obtained by the matching module 35 from the match analysis. The runtime library 7 provides a cache for the data and conclusion needed by the matching module 35 to perform a match analysis. Compared with the storage of fact data or conclusion in an external device, the storage mode of the runtime library 7 saves the time spent on a match analysis and speeds up the match analysis as well.

### 5. User interface module 9

The user interface module 9 connects with the inference engine 3, the data acquisition module 5 and the knowledge acquisition module 11. The user interface module 9 receives the request and fact data input by the user and displays the user the premises of the knowledge in the knowledge list and the conclusion obtained by the matching module 35 from the match analysis. The design (and the optimization) of the user interface module 9 provides a convenient and clear man-machine interface for order preprocessing and also provides a data interface for the internal processing of the system.

### 6. Knowledge acquisition module 11

The knowledge acquisition module 11 connects with the knowledge base 1 and the user interface module 9. The knowledge acquisition module 11 acquires, through the user interface module 9, expert-input knowledge for order preprocessing, and updates the knowledge base 1.

In the technical solution provided by this embodiment, by means of the knowledge base, the inference engine, the data acquisition module, the runtime library, the knowledge acquisition module and the user interface module of the expert system, the premises in the knowledge can be displayed to a CSR as questions through the user interface; then the CSR asks the user questions to obtain the fact data (the answers to the questions) and inputs the fact data to the inference engine through the user interface; the interference engine derives, according to the premises and the fact data, the conclusion as a decision basis for the order processing. Thus, the present invention improves the accuracy of the preprocessing, the user experience as well as the service quality of the operator.

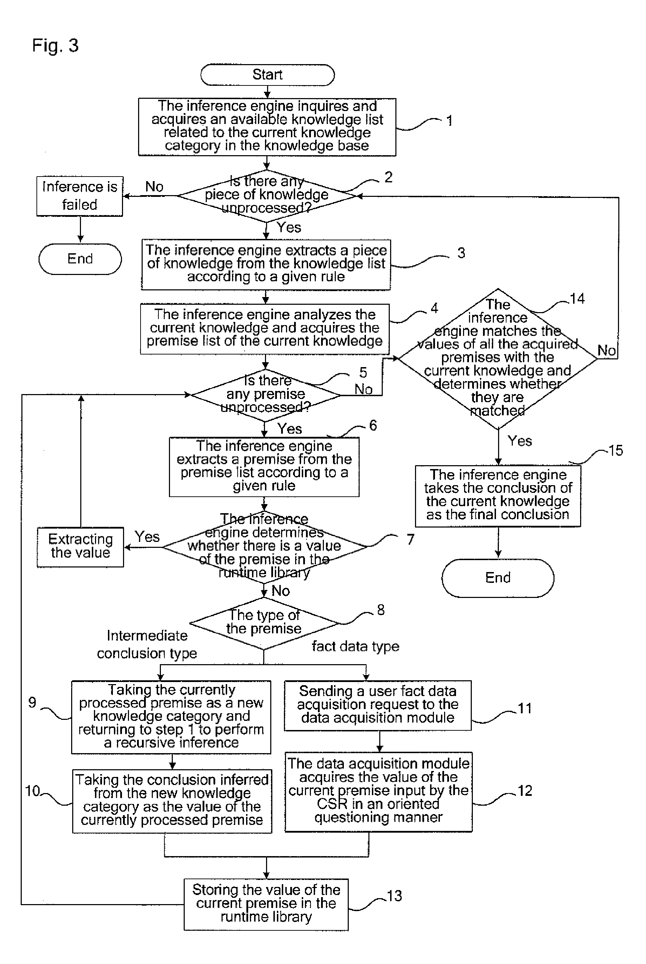

Fig. 3 illustrates the workflow of the modules shown in Fig. 2.

Before the flow shown in Fig. 3 is carried out, the knowledge acquisition module 11 produces various categories of professional knowledge by interacting with experts of every field or in other ways, expresses the knowledge in a computer language, and stores the knowledge in the knowledge base 1.

When handling a service request of a user, a CSR selects a corresponding knowledge category on the user interface module 9 which has been recorded in the knowledge base 1 according to the knowledge category carried in the request; the user interface module 9 sends the knowledge category input by the CSR to the inference engine and actuates the inference engine to infer. Fig. 3 shows the specific inference steps:
step 1, the knowledge reading module 31 sends an inquiry request carrying the knowledge category to the knowledge base 1, and the knowledge base 1 obtains the available knowledge included in the knowledge category according to the inquiry request and sends the knowledge to the knowledge reading module 31 in the form of a knowledge list; wherein the knowledge list carries at least one piece of knowledge, and each piece of knowledge comprises multiple premises, reference data corresponding to the premises, and a conclusion;
step 2, the matching module 35 determines whether there is unprocessed knowledge contained in the knowledge list; if there is no, determines the inference is failed and ends the whole inference process, otherwise, continues processing;
step 3, the matching module 35 extracts a piece of knowledge from the available knowledge list according to a given rule, for example, extracts the piece of knowledge with the highest priority according to the priorities of knowledge;
step 4, the matching module 35 analyzes the current knowledge and acquires a premise list needed for the inference of the current knowledge, that is, the current knowledge comprises multi-premises;
step 5, the matching module 35 determines whether there are unprocessed premises in the premise list of the current knowledge; if there is no, the process proceeds to step 14, otherwise, turns to step 6;
step 6, the matching module 35 extracts a premise from the premise list according to a given rule, for example, extracts the premise that is arranged at the top according to a given arrangement order;
step 7, the matching module 35 determines whether there is a value of the premise which has been stored in the runtime library 7, if so, extracts the value directly and gets back to step 5, if not, the process continues;
step 8, the matching module 35 determines the type of the premise, proceeds to step 9 if the premise is of an intermediate conclusion type, or proceeds to step 11 if the premise is of a user fact data type;
step 9, the matching module 35 takes the premise as a new knowledge category and returns to the first step (step 1) to perform a recursive inference;
step 10, the matching module 35 infers a final conclusion from the new knowledge category and takes the final conclusion as the value of the premise, and then the process proceeds to step 13;
step 11, the data reading module 33 sends a user fact data acquisition request to the data acquisition module 5;
step 12, the data acquisition module 5 outputs the premise to the user interface module 9 which then displays the premise as a question; the CSR acquires the answer of the user to this question, takes the answer as the fact data, that is, takes the answer as the value of the premise, and inputs the answer to the data acquisition module 5; and then the process proceeds to step 13;
step 13, the data acquisition module 5 stores the value of the premise in the runtime library 7 and then the process returns to step 5; wherein the premise stored in the runtime library 7 may be directly extracted if it is needed by another piece of knowledge;
step 14, the matching module 35 determines whether the current knowledge is matched according to the values of all the acquired premises, that is, searches for matched reference data according to the fact data input by the user specific to the premises of the knowledge; the conclusion is acquired if the reference data is found which is matched with all the fact data, and the process proceeds to step 15, otherwise, the process returns to step 2;
step 15, the matching module 35 of the inference engine takes the conclusion of the current knowledge that is subjected to the match analysis as the final conclusion; then, the whole inference process ends.

At last, the matching module 35 displays the final conclusion of the inference to the CSR through the user interface module 9, the CSR performs a final processing according to the content of the final conclusion. Specifically, the final conclusion may be a problem generally need to be explained by the CSR to the user and then understood by the user; or the final conclusion may be a problem of the enterprise, in this case, the CSR fills an order using related software in the call center so that other departments of the enterprise can continue to handle the problem.

The aforementioned modules may be set in different manners in practical implementation processes.
1. The knowledge base 1 may be realized by a common database, such as ORACLE, SYBASE, SQLSERVER and the like. In the knowledge base 1, each piece of knowledge may be described by a knowledge representation method of production rule in the expert system. For example, the knowledge described in the following way can be taken as a piece of knowledge for determining a fault of Personal Access Phone System (PAS.
   IF fault type=bad signal AND bad-signal areas=all areas AND whether the signal condition is improved after the SIM card is inserted into another terminal=Yes
   THEN 'the bad signal is caused by a fault of the user terminal, and the user is suggested to repair or replace the terminal'
   In the above knowledge, 'fault type', 'bad-signal areas' and 'whether the signal condition is improved after the SIM card is inserted into another terminal' all belong to the premises of the knowledge, that is, belong to the questions for determining a fault of PAS; 'Bad signal', 'All areas' and 'Yes' are reference data of corresponding premises; and 'the bad signal is caused by a fault of the user terminal, and the user is suggested to repair or replace the terminal' is the conclusion of the knowledge. Furthermore, all the premises of the knowledge are premises of user fact data type and should be displayed to the CSR one by one by the data acquisition module 5 through the user interface module 9 as questions in an oriented questioning manner, and after getting answers by communications with the user, the CSR needs to fill the values of these premises. After obtaining the fact data, the matching module 35 compares the fact data with the reference data, and derives the conclusion if the two types of data are the same.
   Besides, when recording knowledge, experts also should describe the priority of knowledge for distinguishing multiple pieces of knowledge.
2. The inference engine 3 may be realized by using Enterprise JAVA Bean (EJB) technology. Specifically, an EJB interface may be externally provided to receive a request from a CSR and display the conclusion and the result of the inference through the user interface module 9; the EJB technology may be also used to interact with the knowledge base 1, the runtime library 7 and the data acquisition module 5.
3. The data acquisition module 5 may be also realized using the EJB technology. An EJB interface may be externally provided to receive a user fact data acquisition request sent from the data reading module 33 and interacts with a CSR through the user interface module 9 developed by a B/S development technology. Specifically, the user interface module 9 displays, in an oriented questioning manner, the question and the reference data corresponding to the premises one by one to a CSR, for example, the content to be displayed comprises: (1) question: which areas are the bad-signal ones? (2) optional answers (that is, reference data): all areas; designated area only.
4. The knowledge base 7 may be realized by a common database, such as ORACLE, SYBASE, SQLSERVER.
5. The user interface module 9 may be realized by developing a user interface using B/S development technology.
6. The knowledge acquisition module 11 may be realized by developing a user interface using B/S development technology, and the experts of this field can directly record various categories of knowledge one by one using the user interface.

It can be seen that: the work of the modules minimizes the manual operation during the order preprocessing, and the mechanism of an expert system makes non-manual operations as high intelligent as possible, therefore, not only the accuracy and the efficiency of the order preprocessing but also the user experience and the operational level of the operator are improved.

An embodiment of the present invention provides an order preprocessing method; preferably, the method is realized by the expert system for order preprocessing provided in the aforementioned embodiment.

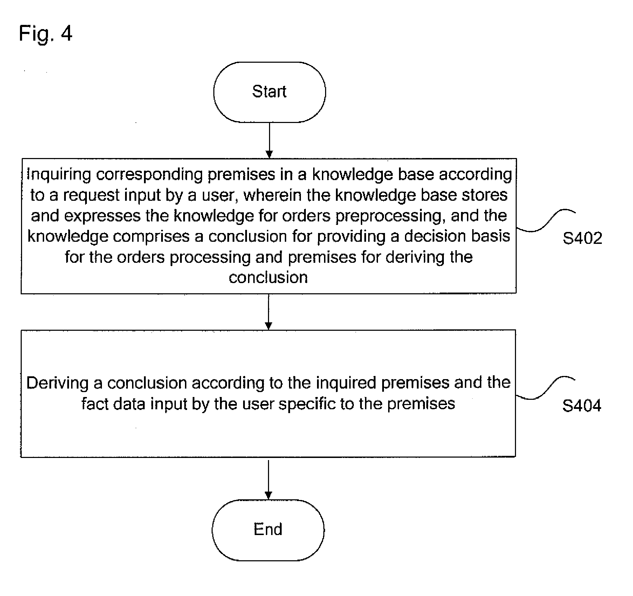

Fig. 4 shows the flow of the order preprocessing method according to a method embodiment of the present invention. It should be illustrated that the steps shown in the flow chart may be executed in, for example, a computer system consisting of a group of computer executable instructions; moreover, although a logic order is shown in the flow chart, the steps shown or described in the flow chart may be executed in different orders in some cases.

As shown in Fig. 4, the order preprocessing method according to this embodiment comprises:

### 1, step S402

S402, inquiring corresponding premises in a knowledge base according to a request input by a user, wherein the knowledge base stores and expresses the knowledge for order preprocessing, and the knowledge comprises a conclusion for providing a decision basis for the order processing and premises for deriving the conclusion;

Preferably, the process of inquiring corresponding premises in a knowledge base according to a request input by a user comprises: sending an inquiry request to the knowledge base according to the knowledge category carried in the request, and receiving a knowledge list corresponding to the knowledge category from the knowledge base; wherein the knowledge list contains at least one piece of knowledge, and each piece of knowledge comprises at least one premise, reference data for indexing the at least one premise, a conclusion corresponding to each piece of knowledge, and preferably, a match analysis priority corresponding to a piece of knowledge in at least one piece of knowledge.

### 2. step S404

S404, deriving a conclusion according to the inquired premises and the fact data input by the user specific to the premises.

Preferably, the knowledge with the current highest priority is taken as the one to be subjected to a match analysis. The process for deriving the conclusion specifically comprises: for the knowledge in the knowledge list that is currently subjected to a match analysis, searching for the matched reference data according to the fact data input by the user specific to the premises of the knowledge, deriving the conclusion if the reference data can be found which is matched with all the fact data input by the user specific to the knowledge; otherwise, stopping the match analysis on the knowledge if no reference data is found which is matched with the fact data input by the user specific to the premises of the knowledge, and taking a next piece of knowledge in the knowledge list as the knowledge to be subjected to a match analysis. If the premises of the knowledge in the knowledge list that is currently subjected to a match analysis are indexed to another piece of knowledge, another piece of knowledge is performed a match analysis, and the conclusion resulting from the match analysis is taken as the fact data of the premises. Preferably, the fact data input by the user specific to the questions corresponding to premises may be stored, the stored fact data can be used to answer questions corresponding to the same premises later, that is, to perform a match analysis on the fact data and the reference data corresponding to the same premises later.

In the technical solution provided by this embodiment, a match analysis can be performed through the inference mechanism of the expert system according to the premises contained in the knowledge and the fact data input by the user specific to the premises, and the conclusion resulting from the match analysis can be taken as the decision basis for order processing, therefore, the accuracy of the order preprocessing is improved, furthermore, the time for order preprocessing is shortened through the oriented questioning mode provided by the expert system, which improves the user experience and the service quality of the operator.

Based on the above description, the specific implementation process of the order preprocessing method according to this embodiment is further described below in details in combination with Fig. 2 and Fig. 3.

First, the knowledge acquisition module 11 produces various categories of professional knowledge by interacting with experts of every field or in other ways, expresses the knowledge in a computer language, and stores the knowledge in the knowledge base 1.

For example, an expert in the PAS fault handling field records the following knowledge 1 and knowledge 2 using the knowledge acquisition module 11.

(Knowledge 1, priority 1) IF fault type=bad signal AND bad-signal areas=all areas AND whether the signal condition is improved after the SIM card is placed into another terminal=Yes

THEN 'the bad signal is caused by a fault of the user terminal, and the user is suggested to repair or replace the terminal'

(Knowledge 2, priority 2) IF fault type=bad signal AND bad-signal areas=designated area only AND type of designated area=underground parking

THEN 'please understand that due to technical defects of PAS, it is indeed difficult for signal cover in an underground parking'

A CSR receives a service request of a user who reflects that his/her PAS malfunctions and needs a solution. According to the type of the service request, the CSR selects a recorded knowledge category for handling faults of PAS from the knowledge base 1 through the user interface module 9, and requires the inference engine 3 to start inferring. Referring to Fig. 2 and Fig. 3, the inference process of the inference engine specifically comprises:
step 1, the knowledge reading module 31 sends the knowledge base 1 an inquiry request carrying the knowledge category, that is, the knowledge category for handling faults of PAS, and acquires an available knowledge list related to the knowledge category searched out by the knowledge base 1 according to the request, wherein the knowledge list contains knowledge 1 and knowledge 2;
step 2, the matching module 35 determines whether there is unprocessed knowledge contained in the knowledge list, and proceeds to the following step as neither knowledge 1 nor knowledge 2 in the current knowledge list is processed;
step 3, the knowledge reading module 31 extracts a piece of knowledge from the available knowledge list according to a match analysis priority, as the knowledge 1 has a higher priority, the knowledge 1 is extracted first;
step 4, the matching module 35 analyzes the knowledge 1, acquires a list containing all the premises needed for the inference of the current knowledge, which includes fault type, bad-signal area, and whether the signal condition is improved after the SIM card is inserted into another terminal. Steps 1 to 4 may be taken as a counterpart to step S402;
step 5, the matching module 35 extracts the premises in the premise list one by one from left to right and then processes the premises; as the premises are all premises of user fact type, the data reading module 33 sends a request for acquiring corresponding user fact data to the data acquisition module 5;
step 6, the data acquisition module 5 displays, in an oriented questioning manner, the premises through the user interface module 9, the CSR gets, after questioning, the fact data (or values of the premises) provided by the user specific to the premises, and inputs the values of corresponding premises through the user interface module 9, such as:
   fault type=bad signal; bad-signal areas=designated area; whether the signal condition is improved after the SIM card is placed into another terminal=No
step 7, the data acquisition module 5 stores the values of the premises in the runtime library 7 and determines all the premises in the knowledge 1 have been processed;
step 8, the matching module 35 compares all the current values of premises with the reference data in the knowledge 1 to determine whether they are the same, and then finds that the reference data, 'bad-signal area', in the knowledge 1 is 'all area' while the fact data answered by the user is 'designated area', therefore, the knowledge 1 is unmatched;
step 9, the matching module 35 extracts another knowledge according to the match priority to obtain the knowledge 2;
step 10, the matching module 35 analyzes the knowledge 2, acquires a list containing all the premises needed for the inference of the current knowledge, including fault type, bad-signal area and type of designated area;
step 11, the matching module 35 extracts the premises in the premise list one by one from left to right and then processes the premises; the matching module 35 finds that the values of the two premises, fault type' and 'bad-signal area', have existed in the runtime library 7, then performs no processing on the two premises and directly obtains their values from the runtime library;
step 12, the matching module 35 also finds that the premise, 'type of designated area', in the knowledge 2 is not contained in the runtime library and then continues to process the premise; as the premise is a premise of user fact type, the data reading module 35 sends a request of acquiring corresponding user fact data to the data acquisition module 5;
step 13, the data acquisition module 5 displays the premise through the user interface module 9 in an oriented questioning manner, and after communication with the user, the CSR inputs the value of the corresponding user fact data as follows: 'type of designated area=underground parking';
step 14, the data acquisition module 5 stores the value of the premise, 'type of designated area', in the runtime library and determines all the premises in the knowledge base 2 have been processed;
step 15, the matching module 35 compares all the current values of premises with the knowledge 2 to determine whether they are matched; then it is found that all the current values of premises are completely matched with the knowledge 2, sequentially, the inference engine takes the conclusion of the knowledge 2 as the final conclusion of the inference of the current knowledge category: 'please understand that due to technical defects of PAS, it is indeed difficult for signal cover in an underground parking'. Then, the whole inference process ends; steps 5 to 15 are corresponding to step S404.

At last, the matching module 35 displays the final conclusion of the inference to the CSR through the user interface module 9. And the CSR makes an explanation to the user with the content of the final conclusion and ends the service processing request of the user.

In the technical solution provided by this embodiment, by setting an expert system, a match analysis can be performed using the inference mechanism of the expert system according to the premises included in the knowledge and the fact data input by the user specific to the premises, and the conclusion resulting from the match analysis can be taken as the decision basis for order processing. Furthermore, a CSR can be guided what questions to be asked to a user according to the premises needed for the inference of the knowledge in an oriented questioning manner; therefore, all CSRs can ask users questions according to the professional logic of the experts in a specific field, equivalent to all CSRs mastering the domain knowledge of the experts. In conclusion, this embodiment can realize a fast (that is, by the least questions) and accurate inference in an oriented questioning manner to derive a conclusion, therefore, the preprocessing time and the average communication time are greatly shortened, and the accuracy of order preprocessing as well as the user experience and the service quality of the operator is improved.

Furthermore, as an expert system is set in the embodiments of the present invention, by virtue of the knowledge stored in the expert system and the easy-to-use oriented interaction means, CSRs are only required to master the use of the user interface of the method and the system disclosed in the present invention after simple training, therefore, CSRs are free from mastering the professional knowledge of all businesses and services, and consequentially, the difficulty as well as the workload and cost of the operator on training CSRs is reduced.

Apparently, it should be understood by those skilled in the art that the modules or steps of the invention can be realized by a universal computer, they are centralized on a single computer or distributed on a network consisting of multiple computers. Optionally they may be realized by computer-executable program codes, the modules or steps can be therefore stored in a storage device to be executed by a computer or separately manufactured into integrated circuit modules, or some of the modules or steps are manufactured into a single integrated circuit module. Thus, the present invention is not limited to any special combination of hardware and software.

The mentioned above are only preferred embodiments of the invention but not limitation for the invention. Various modifications and variations can be devised by those skilled in the art, and it should be understood that any modification, equivalent and improvement devised without departing from the scope of the present invention belong to the protection scope of the present invention.

## Claims

1. An expert system for order preprocessing, comprising:
a knowledge base for storing and expressing knowledge for order preprocessing, wherein the knowledge comprises a conclusion for providing a decision basis for order processing and premises for deriving the conclusion; and
an inference engine for inquiring corresponding premises in the knowledge base according to a request input by a user and deriving a conclusion according to the inquired premises in combination with fact data input by the user specific to the premises.

2. The system according to claim 1, further comprising:
a data acquisition module for acquiring, according to the premises inquired by the inference engine, the fact data input by the user specific to the premises, and sending the acquired fact data to the interference engine.

3. The system according to claim 2, wherein the inference engine comprises:
a knowledge reading module for sending an inquiry request to the knowledge base according to knowledge category carried in the request and receiving a knowledge list corresponding to the knowledge category from the knowledge base, wherein the knowledge list contains at least one piece of knowledge, and each piece of knowledge comprises at least one premise, reference data for indexing at least one premise and a conclusion corresponding to a piece of knowledge;
a data reading module for sequentially sending premises of knowledge in the knowledge list that is currently subjected to a match analysis to the data acquisition module and indicating the data acquisition module to acquire fact data; and
a matching module for performing a match analysis on the knowledge according to the reference data and the fact data and obtaining the conclusion if the fact data is totally matched with the reference data.

4. The system according to claim 3, wherein the matching module is further used for:
indicating, if the fact data is unmatched with the reference data, the data reading module to acquire fact data for a next piece of knowledge in the knowledge list and performing a match analysis on the next piece of knowledge.

5. The system according to claim 3, further comprising:
a runtime library for storing the fact data acquired by the data acquisition module and/or the conclusion obtained by the matching module from matching analysis.

6. The system according to claim 3, further comprising:
a user interface module for receiving the request and the fact data input by the user and displaying the user the premises of the knowledge in the knowledge list from the data acquisition module and the conclusion obtained by the matching module from matching analysis.

7. The system according to claim 1, further comprising:
an knowledge acquisition module for acquiring knowledge required for the order preprocessing and updating the knowledge base.

8. An order preprocessing method, comprising:
inquiring corresponding premises in a knowledge base according to a request input by a user, wherein the knowledge base contains knowledge for order preprocessing, and the knowledge comprises a conclusion for providing a decision basis for order processing and premises for deriving the conclusion; and
deriving a conclusion according to the inquired premises and fact data input by the user specific to the premises.

9. The method according to claim 8, wherein the processing of inquiring corresponding premises in a knowledge base according to a request input by a user comprises:
sending an inquiry request to the knowledge base according to knowledge category carried in the request and receiving a knowledge list corresponding to the knowledge category from the knowledge base; wherein the knowledge list contains at least one piece of knowledge, and each piece of knowledge comprises at least one premise, reference data for indexing at least one premise and a conclusion corresponding to a piece of knowledge.

10. The method according to claim 9, wherein the processing of deriving the conclusion comprises:
for knowledge in the knowledge list that is currently subjected to a match analysis, searching for matched reference data according to fact data input by the user specific to premises of the knowledge, deriving the conclusion if the reference data can be found which is matched with all the fact data input by the user specific to the knowledge; or stopping the match analysis on the knowledge if no reference data is found which is matched with the fact data input by the user specific to the premises of the knowledge, and then taking a next piece of knowledge in the knowledge list as knowledge to be subjected to a match analysis.

11. The method according to claim 10, further comprising:
If the premises of the knowledge in the knowledge list that is currently subjected to a match analysis are indexed to another piece of knowledge, performing a match analysis on the another piece of knowledge, and taking a conclusion resulting from the match analysis as fact data of the premises.

12. The method according to claim 10, wherein the processing of deriving the conclusion according to the inquired premises and the fact data input by the user specific to the premises further comprises:
after the user inputs the fact data specific to the premises, storing the fact data so that a match analysis can be performed later on the fact data and the reference data corresponding to the same premises.

13. The method according to any one of claims 7-12, wherein the knowledge list further comprises a match analysis priority corresponding to a piece of knowledge in the at least one piece of knowledge.
